# EUROPÄISCHE PATENTSCHRIFT

(11) **EP 3 548 197 B1**
(45) Veröffentlichungstag und Bekanntmachung des Hinweises auf die Patenterteilung: **21.07.2021**
(21) Anmeldenummer: 17800853.8
(22) Anmeldetag: 20.11.2017
(51) Int. Cl.: B21D 22/02, B21D 26/033, B21D 26/057, B21D 35/00

(54) **VERFAHREN ZUR HERSTELLUNG EINES WENIGSTENS PARTIELL GEHÄRTETEN PROFILBAUTEILS**
METHOD FOR PRODUCING AN AT LEAST PARTIALLY HARDENED PROFILED COMPONENT
PROCÉDÉ POUR LA FABRICATION D'UN ÉLÉMENT PROFILÉ AU MOINS PARTIELLEMENT DURCI

(30) Priorität: 01.12.2016 DE 102016123265
(43) Veröffentlichungstag der Anmeldung: 09.10.2019
(73) Patentinhaber: Linde + Wiemann SE&Co. KG, 35683 Dillenburg (DE)
(72) Erfinder: MISS, Hermann, 57319 Berleburg (DE); NEUL, Daniela, 35638 Biskirchen (DE); KOPFER, Peter, 1220 Wien (AT); BELL, Martin, 35683 Dillenburg (DE); VOGT, Elmar, 58509 Lüdenscheid (DE); SCHMIDT, Werner, 63755 Alzenau (DE)
(74) Vertreter: Müller, Eckhard
(86) Internationale Anmeldenummer: PCT/EP2017/079725
(87) Internationale Veröffentlichungsnummer: WO 2018/099744

(56) Entgegenhaltungen:
- DE-A1-102011 055 643
- US-A- 5 333 775
- US-A1- 2007 193 013
- US-A1- 2011 233 961

## Beschreibung

Die Erfindung betrifft ein Verfahren zur Herstellung eines wenigstens partiell gehärteten Profilbauteils, bei welchem ein Halbzeug nach Erwärmung auf eine Härtungstemperatur in einem Umformwerkzeug mittels Innenhochdruckumformen oder Pressen zu dem Profilbauteil umgeformt wird, welches nach dem Umformen innerhalb des Umformwerkzeuges durch Abschrecken gehärtet wird.

Insbesondere bezieht sich die Erfindung auf strukturelle Profilbauteile für Kraftfahrzeuge, wie etwa A-, B-Säulen oder andere Rahmenteile, die zur Herstellung selbsttragender Karosserien verwendet werden können. Im Besonderen kann es sich bei dem Profilbauteil um eine A-Säule für ein Cabriolet handeln.

Derartige Profilbauteile unterliegen einerseits höchsten Anforderungen hinsichtlich der Festigkeit, um die Unfallsicherheit beispielsweise von Kraftfahrzeugen zu erhöhen. Andererseits stehen diesen Anforderungen im modernen Kraftfahrzeugbau der Wunsch nach hoher Flexibilität hinsichtlich der Formgestaltung sowie Leichtbauerfordernisse entgegen.

Die oben genannten Profilbauteile, die insbesondere im Kraftfahrzeugbau verwendet werden, unterliegen auch unterschiedlichen Anforderungen hinsichtlich ihrer mechanischen Festigkeit. Derartige Bauteile sollen beispielsweise in einem ersten Abschnitt mechanisch steifer und in einem in einem anderen Abschnitt leichter verformbar ausgebildet sein. Beispielsweise muss eine A- oder B-Säule als Teil der Knautschzone eines Kraftfahrzeugs bereichsweise eine höhere Festigkeit aufweisen, um im Falle eines Aufpralls im Bereich der höchsten Belastung nicht zu versagen. Andererseits soll dasselbe Bauteil durch dessen Verformung möglichst viel Aufprallenergie in Umformarbeit umwandeln. Bei A-Säulen für Cabriolets ist es beispielsweise erforderlich, dass die A-Säulen im Falle eines Überschlags den Fensterrahmen der Frontscheibe ausreichend abstützt, um einen Überlebensraum für die Fahrzeuginsassen zu gewährleisten. Eine solche A-Säule muss deshalb insbesondere im Übergangsbereich zwischen dem Kotflügel und dem Fensterrahmen besonders hohe mechanische Festigkeit aufweisen. Dazu werden mitunter Profilbauteile verwendet, die entlang ihrer Erstreckung einen ungleichförmigen Querschnitt aufweisen, um beispielsweise an bestimmten Stellen in einer bestimmten Richtung besonders biegesteif zu sein. Das bedeutet, dass entlang der Erstreckung des jeweiligen Bauteils die Querschnittsform beispielsweise von einer runden Grundform in eine Kastenform und dann wieder in eine runde oder ovale Form übergeht, um an unterschiedlichen Stellen des Bauteils die jeweils sektionsbezogenen Umfänge des Profils und die entsprechenden Übergänge der verschiedenen Profilquerschnitte sicherzustellen.

Derartige Bauteile können beispielsweise durch das so genannte U-O-Biegeverfahren hergestellt werden, bei welchem aus einer flachen Blechplatine zunächst ein im Querschnitt U-förmiges Bauteil erstellt wird, welches dann in einem zweiten Arbeitsschritt zu einem geschlossen O-Profil umgeformt wird. Gleichzeitig kann bei einem solchen U-O-Biegeverfahren das Bauteil in Richtung seiner Erstreckung gebogen werden, so dass eine ursprünglich als Gerade ausgebildete Erstreckung in eine zwei- oder dreidimensionale Erstreckungskurve umgeformt wird. Auf diese Weise kann beispielsweise ein Halbzeug erzeugt werden, welches in einem weiteren Arbeitsschritt durch einen in den Rohling eingeführen Formdorn ein Einfallen des Querschnitts sicherstellt.. Ein derartiges Verfahren ist beispielsweise aus der EP 2 205 370 B1 bekannt. Dieses Verfahren hat jedoch den Nachteil, dass wenigstens ein Ende des Halbzeugs sowie ein Ende des fertigen Bauteils eine ausreichend große Querschnittsform zur Aufnahme des Ziehdorns aufweisen muss. Dadurch ist der Gestaltungsspielraum bei der Entwicklung der Endform eingeschränkt.

Aus der EP 2 282 853 B1 ist ein Stützkern für ein solche U-O-Verfahren bekannt, der in einer Vorrichtung zum Umformen von Platinen in ein strukturiertes Hohlprofil Verwendung findet. Der Stützkern weist eine Mehrzahl miteinander verbundener Stützglieder auf, wobei die einzelnen Stützglieder in zusammengeschobener Position mindestens teilweise flächig die Innenkontur des herzustellenden Hohlprofils bilden und über Kupplungselemente miteinander verbunden sind. Bei dem entsprechenden Herstellungsverfahren wird zunächst eine Platine U-förmig umgeformt. Dann wird der Stützkern in die U-förmige Platine eingebracht, um daraufhin die Platine durch eine U-O-Umformung oder durch eine Einrolltechnik zu einem Hohlprofil umzuformen.

Aus der DE 10 2009 003 668 A1 ist ein Verfahren und eine Vorrichtung zur Herstellung geschlossener Profile bekannt, wobei eine Platine auf die nach oben zeigenden Kanten der Seitenwände eines ersten Gesenks aufgelegt wird. Ein U-Stempel wird in die Matrize des ersten Gesenks eingefahren, so dass die Platine vorgeformt wird. Durch die Bewegung der Seitenwände des ersten Gesenks relativ zur Matrize des ersten Gesenks wird die Platine zu einer zumindest teilweise U-förmigen Querschnittsform ungeformt, wobei der U-Stempel in der Matrize des ersten Gesenks positioniert bleibt. Der U-Stempel wird dann aus der U-förmig geformten Platine und der Matrize des ersten Gesenks entfernt, und ein Stützkern wird in die U-förmig umgeformte Platine eingebracht. Im Weiteren wird dann ein zweites, gegenüberliegendes Gesenk zum ersten Gesenk positioniert. Über die Seitenwände des zweiten Gesenks, welche auf den Seitenwänden des ersten Gesenks aufliegen, werden die Seitenwände des ersten Gesenks relativ zur Matrize des ersten Gesenks verschoben, so dass die U-förmig gebogene Platine in ein Profil mit geschlossener Querschnittsform umgeformt wird.

Zur Herstellung von Strukturbauteilen für Kraftfahrzeuge ist es ferner bekannt, Hohlprofile mittels Innenhochdruck in eine Endgestalt zu formen. Hierzu ist aus der WO 98/54370 ein Herstellungsverfahren zum Blasformen eines erwärmten hohlen Rohlings bekannt, der im Anschluss an das Aufweiten in demselben Umformwerkzeug durch Einleitung eines Kühlmediums abgeschreckt wird, so dass das Bauteil bei der Entnahme aus dem Umformwerkzeug bereits gehärtet ist.

Weitere Innenhochdruckumformverfahren sind beispielsweise aus der WO 2010/105341 A1 und der DE 10 2007 018 281 A1 bekannt.

Bei dem aus der WO 2010/105341 A1 bekannten Verfahren wird zunächst ein Rohr mit runder bzw. kreisförmiger Querschnittsform abschnittsweise derart umgeformt, dass sich die Querschnittsform entlang der Erstreckung des Rohres verjüngt. Dann wird das so geformte Rohr unter Verwendung eines Biegeverfahrens in eine Gestalt gebracht, die einer zwei- oder dreidimensionalen Kurve folgt. Anschließend wird das so erzeugte Halbzeug mittels Hydroformen in die Endform umgeformt. Um ein Versagen des Materials während des Hydroformens auf Grund von Kaltverfestigung während der vorgelagerten Umformschritte zu vermeiden, ist eine zwischengeschaltete Wärmebehandlung des Halbzeugs erforderlich, um es für den Hydroformschritt umformbar zu machen. Das Halbzeug kann dabei auch aus zwei miteinander verschweißten und bereits kegelig vorgeformten Profilsegmenten zusammengesetzt werden, die im Anschluss an ihr Verschweißen in einer Biegemaschine in Annäherung an die vorgesehene Endgestalt gebogen werden. Insgesamt gestaltet sich dieses Verfahren jedoch recht aufwendig, da die bei der Herstellung des Halbzeugs hervorgerufenen Kaltverfestigungen mittels einer Wärmebehandlung vor dem Hydroformen ausgeglichen werden müssen.

Gemäß dem aus der DE 10 2007 018 281 A1 bekannten Verfahren ist es möglich, das Halbzeug aus zwei vorgeformten rohrförmigen Profilsegmenten vorzusehen. Dabei werden die Enden der jeweiligen Profilsegmente derart zugerichtet, dass sie sich ineinanderschieben lassen, um einen gasdichten Abschluss für das anschließende Innenhochdruckumformen zu gewährleisten. Dies erfordert wiederrum, dass beide Profilsegmente an ihren Enden einer besonderen Behandlung unterzogen werden, die auch hohen Toleranzanforderungen unterliegen, damit ein gasdichter Abschluss zwischen den beiden Profilsegmenten erreicht wird. In der Endgestalt des Profilbauteils sind dann beide Profilsegmente mittels einer formschlüssigen, radial umlaufenden Verbindung zusammengesetzt, welche jedoch einen Einfluss auf die Endgestalt des herzustellenden Profilbauteils hat.

Es wäre auch denkbar, das aus der WO 98/543 70 A1 bekannte Verfahren auf einen durch das vorstehend beschriebene U-O-Profilformverfahren hergestelltes Halbzeug anzuwenden. Ein solches Vorhaben unterläge jedoch dem Problem, dass zur Herstellung des Halbzeugs, welches mitunter eine Länge von über einem Meter erreichen kann, spezielle Pressen mit einem extrem hohen Hub, etwa von mehr als einem Meter erforderlich werden, um das vorstehend genannte U-O-Umformverfahren durchführen zu können. Zudem werden entsprechende Halbzeuge iterativ zusammen mit dem Werkzeug für den anschließenden Hochdruckumformprozess entwickelt, wobei Formänderungen auf Grund von Herstellbarkeitserfordernissen beim Halbzeug und beim Endprodukt jeweils das andere Verfahren beeinflussen. Somit gestaltet sich die Entwicklung eines entsprechenden Bauteils als besonders aufwendig.

Aus der US 2011/233961 A1 ist ein Verfahren bekannt, bei welchem ein röhrenförmiges Element mit variierender Wanddicke, das mindestens ein erstes und ein zweites Material aufweist, durch ein Biegeverfahren und Hydroformung umgeformt wird.

Aus der US 2011/233961 A1 ist ein Verfahren bekannt zur Herstellung eines Profilbauteils, wobei zunächst ein erstes Profilsegment, das entlang seiner Erstreckung eine gleichförmige Querschnittsform aufweist, und ein zweites Profilsegment, das entlang seiner Erstreckung eine ungleichförmige Querschnittsform aufweist, an einer Fügestelle aneinandergefügt werden, um wenigstens einen Teil eines Halbzeugs zu bilden, und das erste und das zweite Profilsegment dazu an der Fügestelle im Wesentlichen miteinander übereinstimmende Querschnittsformen aufweisen, wobei das Halbzeug in einem Umformwerkzeug mittels Innenhochdruckumformen oder Pressen zu dem Profilbauteil umgeformt wird.

Aus der US 2007/193013 A1 ist ein Verfahren zur Formung einer komplex gestalteten Rohrstruktur bekannt. Ein Blech-Rohling mit einer Längsachse wird um die Längsachse herum zu einer Rohrstruktur zusammengerollt und die Seitenkanten des Rohlings werden anschließend zu einem Rohr zusammengeschweißt. Das Rohr wird dann in ein Hydroformungs-Werkzeug eingeschlossen und mit Druck beaufschlagt, um das Rohr an die Gestalt des Werkzeugs anzupassen und dadurch die gewünschte, komplexe Gestalt zu formen.

Aus der US 5 333 775 A ist ein Verfahren zum Formen eines rohrförmigen Bauelements mit einem ersten und einem zweiten Rohr bekannt, das eine selektiv örtlich festgelegte Veränderung in Längsrichtung der Wanddicke und/oder des Umfanges aufweist. Ein Ende des ersten Rohres wird an ein Ende des zweiten Rohres entweder direkt oder mittels eines Übergangsrohres angeschweißt. Der Rohrrohling wird in ein Gesenk eingebracht, das zusammenwirkende Gesenkabschnitte aufweist, die einen Längshohlraum definieren. Der Rohrrohling wird hydroumgeformt, so dass er radial nach außen entsprechend des Längshohlraums des Gesenks umgeformt wird.

Aus der DE 10 2011 055643 A1 ist ein Verfahren und ein Umformwerkzeug zum Warmumformen und Presshärten von plattenförmigen oder vorgeformten Werkstücken aus Stahlblech bekannt, bei dem das Werkstück auf eine Temperatur oberhalb der Austenitisierungstemperatur erhitzt und anschließend in einem gekühlten Umformwerkzeug, das mindestens einen Stempel und mindestens eine Matrize aufweist, umgeformt und abgeschreckt wird.

Vor diesem Hintergrund liegt der Erfindung die Aufgabe zu Grunde, ein verbessertes Verfahren anzugeben, welches eine Vereinfachung des Entwicklungsprozesses sowie eine Reduktion der Investitionskosten der erforderlichen Herstellungsmaschinen erlaubt.

Diese Aufgabe wird gelöst durch ein Verfahren gemäß Anspruch 1.

Das erfindungsgemäße Verfahren zur Herstellung eines wenigstens partiell gehärteten Profilbauteils sieht vor, dass zunächst ein erstes Profilsegment, das entlang seiner Erstreckung eine gleichförmige Querschnittsform aufweist, und ein zweites Profilsegment, dass entlang seiner Erstreckung eine ungleichförmige Querschnittsform aufweist, an einer Fügestelle aneinandergefügt werden, um wenigstens einen Teil eines Halbzeugs zu bilden, wobei das erste und das zweite Profilsegment an der Fügestelle im Wesentlichen miteinander übereinstimmende Querschnittsformen aufweisen. Nach Erwärmung wird das Halbzeug dann auf eine Härtungstemperatur in einem Umformwerkzeug mittels Innenhochdruckumformen oder Pressen zu dem Profilbauteil umgeformt, welches danach innerhalb des Umformwerkzeuges durch Abschrecken gehärtet wird.

Beispielsweise kann das erste Profil als Rundrohr ausgestaltet sein. Alternativ kann das erste Profilsegment als gleichförmiges Oval- oder Kastenprofil ausgebildet sein. Beide Profilsegmente können in relativ einfach und gut beherrschbaren Profilwalzprozessen hergestellt werden, wodurch sich die Herstellungskosten für den jeweiligen Abschnitt des Halbzeugs und auch die Investitionskosten der entsprechenden Werkzeuge signifikant reduzieren lassen.

Die Erfindung geht ferner davon aus, dass nur wenige oder auch nur ein einziger Bereich, beispielsweise in Form des zweiten Profilsegmentes mit entlang seiner Erstreckung ungleichförmiger Querschnittsform als Übergangsbereich zwischen zwei gleichförmigen Profilsegmenten ausgebildet sein muss, um bei dem damit hergestellten Profilbauteil die erforderlichen Anforderungen an die mechanischen Eigenschaften zu erfüllen. Auf diese Weise lässt sich beispielsweise bei einer A-Säule eines Cabriolets die Gesamtlänge dieses zweiten Profilsegmentes von etwa 1,5 m auf etwa 0,4 m reduzieren. Somit können deutlich kleinere und damit günstigere Werkzeuge verwendet werden.

Gegenüber einer ebenfalls denkbaren nachträglichen Fügeverbindung bereits endgeformter Profilabschnitte zu einem Profilbauteil hat das vorliegende Verfahren auch den Vorteil, dass etwaige Gefügeveränderungen in den Profilsegmenten automatisch ausgeglichen werden, falls diese durch den Herstellungsprozess der Profilsegmente bzw. durch die Erzeugung der Fügeverbindung zwischen den Profilsegmenten entstehen. An dem fertigen Profilbauteil treten solche Gefügeveränderungen auf Grund der Wärmebehandlung vor dem Innenhochdruckumformen nicht mehr in Erscheinung.

Das erste Profilsegment kann somit geometrisch äußerst einfach und kostengünstig hergestellt werden, wobei die kostenintensiven Umformschritte zur Erstellung des Halbezeugs sich dann auf das zweite Profilsegment beschränken.

Das Umformen in dem Formwerkzeug kann durch einfaches Pressen erfolgen. Dies ist insbesondere bei geometrisch einfachen Profilbauteilen der Fall, bei denen ein Einfallen des Profils aufgrund des Pressvorgangs nicht oder nur in einem tolerierbaren Maß zu erwarten ist. Muss hingegen ein Einfallen des Profils verhindert werden, das heißt ein Anlegen der Halbzeugwandung an die Kontur des Umformwerkzeugs sichergestellt werden, kommt Innenhochdruckumformen zur Anwendung.

Erfindungsgemäß ist vorgesehen, dass das erste Profilsegment durch ein Profilwalzverfahren, insbesondere durch Roll- oder Walzprofilieren und das zweite Profilsegment durch ein U-O-Biegeverfahren erzeugt wird. Ein Beispiel für das U-O-Biegeverfahren ist beispielsweise das sogenannte T3®-Verfahren von Thyssen-Krupp, welches beispielsweise in der EP 2 205 370 B1, der EP 2 282 853 B1 oder DE 10 2009 003 668 A1 beschrieben ist.

Gemäß einer vorteilhaften Ausgestaltung des erfindungsgemäßen Verfahrens ist vorgesehen, dass das zweite Profilsegment bei dessen Herstellung mit einem Verbindungsende erzeugt wird, das mit seiner Querschnittsform im Wesentlichen mit der Querschnittsform des ersten Profilbauteils übereinstimmt. Dies erlaubt, die für das Aneinanderfügen der Profilsegmente erforderlichen Anpassungen der Querschnittsform auf das ohnehin kostenintensivere zweite Profilsegment zu verlagern, wodurch das erste Profilsegment geometrisch noch einfacherer und kostengünstiger herstellbar ist.

Vorzugsweise kann das Fügen der Profilsegmente stoffflüssig, etwa durch Schweißen, besonders bevorzugt durch Laserschweißen, insbesondere durch Orbitallaserschweißen erfolgen. Derartige Fügeoperationen erlauben eine besonders einfache Herstellung der Fügeverbindung zwischen den Profilsegmenten. Dabei werden die Profilsegmente besonders bevorzugt stumpf aneinandergefügt, was eine hohe Durchsatzrate in der Produktionseinrichtung ermöglicht.

In Weiterbildung der Erfindung kann vorgesehen sein, dass an das erste oder das zweite Profilsegment wenigstens ein drittes Profilsegment gefügt wird, welches entweder eine gleichförmige oder ungleichförmige Querschnittsform entlang seiner Erstreckung aufweist. Auf diese Weise lassen sich Halbzeuge herstellen, die in Abhängigkeit von der gewünschten Endgestalt bereits vorgeformt und somit an den nachgeschalteten Innenhochdruckumformprozess optimal angepasst sind. Somit lässt sich ein besonders kostengünstiges Halbzeug für die Herstellung eines Profilbauteils erzeugen, welches wiederum abschnittsweise unterschiedlichen mechanischen Anforderungen unterliegen kann oder auf Grund der Endformgestaltung mit stark abweichenden Umformgraden hergestellt werden muss.

In besonderer Weise kann vorgesehen sein, dass wenigstens eines der Profilsegmente aus einer härtbaren Legierung besteht. Das bedeutet, dass die jeweilige Legierung durch Erwärmen auf eine Härtungstemperatur und anschließendes Abschrecken, d.h. schnelles Abkühlen, härtbar ist. Dabei besteht diese Legierung vorzugsweise aus einem Stahl, insbesondere aus einem bohrlegierten Stahl. Bei dem Härtungsvorgang wird das Bauteil auf Härtungstemperatur erhitzt.

Zur Begriffserklärung sei angemerkt, dass eine Härtungstemperatur eine Temperatur oberhalb einer Gefügeumwandlungstemperatur ist, welche beispielsweise bei einem Stahlwerkstoff für eine Gefügeumwandlung in ein austenitisches Gefüge sorgt. Durch das anschließende schnelle Abkühlen, dem Abschrecken, wandelt sich das Gefüge in ein martensitisches Gefüge um, welches in dem Werkstoff im abgekühlten Zustand dauerhaft erhalten bleibt. Das martensitisches Gefüge ist gegenüber dem Ausgangsgefüge härter. Bei härtbaren Legierungen ist die Werkstoffhärte nach dem Härten gegenüber der zuvor vorliegenden Härte besonders hoch. Insbesondere eignen sich hierfür Stahlwerkstoffe, besonders bevorzugt bohrlegierte Stähle. Auf diese Weise lassen sich zumindest partiell hochfeste Stahlbauteile erzeugen. Ein Beispiel für eine entsprechende Stahlsorte ist 22MnB5 (vgl. SZFG Werkstoffblatt 11-112, Stand 05/14, abrufbar unter http://www.salzqitter-flachstahl.de/fileadmin/mediadb/szfq/informationsmaterial/produktinformationen/kal tgewalztes feinblech/deu/22mnb5.pdf)

Gemäß einer bevorzugten Ausführungsform erfolgt das Innenhochdruckumformen durch ein mit Druck beaufschlagtes Gas als Umformmedium, insbesondere bei einem Druck zwischen 300 und 600 bar, wobei das Abschrecken mit einem separaten Kühlmedium erfolgt, welches nach dem Innenhochdruckumformen in das Umformwerkzeug, insbesondere in das umgeformte Profilbauteil geleitet wird.

Die Umformung des Halbzeugs in das endgeformte Profilbauteil mittels druckbeaufschlagtem Gas hat den Vorteil, dass einerseits die Bereitstellung des Gases in dem vorstehend genannten Druckbereich deutlich kostengünster ist als die Bereitstellung einer unter Druck gesetzten Flüssigkeit, wie sie beim Hydroformen verwendet wird.

Das Innenhochdruckumformen beziehungsweise das Pressen des Halbzeugs findet gemäß der Erfindung bei einer Härtungstemperatur, beispielsweise oberhalb von 950° C statt. Die Temperatur muss bis zum Beginn des Abschreckens vorliegen, um die gewünschte Härtung zu erlangen. Die hohe Temperatur während der Umformung bewirkt eine erhöhte Nachgiebigkeit des Stahls, so dass dieser mittels des druckbeaufschlagten Gases bei Drücken umgeformt werden kann, die deutlich unter den beim Hydroformen gängigen Drücken liegen.

Zudem weißt ein Gas grundsätzlich eine geringere Wärmekapazität und Wärmeleitfähigkeit als eine Flüssigkeit auf, so dass durch Einleitung des Umformmediums die Halbzeugtemperatur nur unwesentlich reduziert wird. Demgegenüber wird als Kühlmedium bevorzugt ein Gas oder eine Flüssigkeit mit einer vergleichsweise höheren Wärmeleitfähigkeit bzw. Wärmekapazität verwendet; beispielsweise kann Wasser oder eine Wasser-ÖI-Emulsion als Kühlmedium verwendet werden. Bevorzugt kann sich das Verfahren zum Innenhochdruckumformen und anschließendem Abschrecken an dem in der WO 98/54370 A1 offenbarten Verfahren orientieren.

Nach dem erfolgten Vorformen des Profilsegmentes durch die Roll- Walzprofilierung bzw. durch das U-O-Biegeverfahren wird das jeweilige Profilsegment an dessen Nahtstelle der aufeinander gebogenen Seiten vorzugsweise durch Schweißen zu einem geschlossenen Hohlprofil gefügt, welches ausreichend fluiddicht ist, um in dem anschließenden Innenhochdruckumformverfahren aufgeweitet werden zu können oder zumindest im Anschluss an ein Pressen das zum Abschrecken erforderliche Kühlmedium aufnehmen zu können. Die durch diese Schweißoperation in das Material eingebrachten Gefügeveränderungen und Spannungen werden beim Erwärmen auf eine Härtungstemperatur und die dabei stattfindenden Gefügeumwandlungsprozesse weitestgehend oder sogar vollständig ausgeglichen, so dass die entsprechende Nahtstelle am fertigen Profilbauteil nicht oder nahezu nicht mehr als Schwachstelle in Erscheinung tritt.

Ein Halbzeug zur Herstellung eines wenigstens partiell gehärteten Profilbauteils kann wenigstens zwei in ihrer Erstreckung hintereinander liegende Profilsegmente vorsehen, die an einer Fügestelle derart aneinandergefügt sind, dass das Halbzeug durch Innenhochdruck oder durch Pressen umformbar ist, wobei das erste Profilsegment eine gleichförmige Querschnittsform und das zweite Profilsegment eine ungleichförmige Querschnittsform entlang der jeweiligen Erstreckung aufweist, und die Profilsegmente an der Fügestelle im Wesentlichen miteinander übereinstimmende Querschnittsformen aufweisen.

Ein derartig ausgebildetes und vorzugsweise nach dem oben beschriebenen Verfahren hergestellte Halbzeug gestattet eine besonders gute Anpassung an den Pressprozess bzw. den Innenhochdruckumformprozess, wobei einerseits die Festigkeitseigenschaften des erzeugten Profilbauteils gegenüber der Menge des eingesetzten und umgeformten Materials optimiert ist. Dies erlaubt insbesondere auch den neuartigen Leichtbauanforderungen bei modernen Kraftfahrzeugen gerecht zu werden, da an weniger stark belasteten Stellen des Profilbauteils auch weniger Material vorgesehen werden kann.

Das zweite Profilsegment kann mit einem Verbindungsende versehen sein, das mit dessen Querschnittsform im Wesentlichen mit der Querschnittsform des ersten Profilbauteils übereinstimmt. Dies hat den Vorteil, dass die bei der Herstellung erforderlichen Anpassungen für ein späteres Fügen der beiden Profilsegmente in dem ohnehin aufwendiger zu produzierenden zweiten Profilsegment konzentriert sind, wodurch das erste Profilsegment besonders kostengünstig und auf einfache Weise herstellbar ist.

Bevorzugt können die Profilsegmente stoffflüssig, beispielsweise durch Schweißen, besonders bevorzugt durch Laserschweißen, insbesondere durch Orbitallaserschweißen aneinandergefügt sein. Dabei können die Profilsegmente Verbindungsenden aufweisen, die an der Fügestelle vorzugsweise stumpf aneinandergefügt sind. Derartige Fügeoperationen erlauben eine besonders einfache Herstellung der Fügeverbindung zwischen den Profilsegmenten. Dabei werden die Profilsegmente besonders bevorzugt stumpf aneinandergefügt, was eine hohe Durchsatzrate in der Produktionseinrichtung ermöglicht.

Vorzugsweise kann vorgesehen sein, dass das Halbzeug wenigstens ein drittes Profilsegment aufweist, das entweder eine gleichförmige oder ungleichförmige Querschnittsform entlang seiner Erstreckung aufweist.

Auf diese Weise kann das Halbzeuge in Abhängigkeit von der gewünschten Endgestalt bereits vorgeformt werden, so dass es an den nachgeschalteten Innenhochdruckumformprozess optimal angepasst ist.

Es kann vorgesehen sein, dass das wenigstens eine Profilsegment aus einer Legierung besteht, die durch Erwärmung auf eine Härtungstemperatur und anschließendes Abschrecken härtbar ist, wobei die Legierung vorzugsweise aus einem Stahl, insbesondere aus einem bohrlegierten Stahl besteht.

Bei dem erfindungsgemäßen Verfahren kann ferner vorgesehen sein, dass die Erstreckung der Profilsegmente und/oder des Halbzeugs zumindest abschnittsweise wenigstens einer Geraden und/oder zweidimensionalen Kurve und/oder dreidimensionalen Kurve folgt.

Hierdurch kann das Halbzeug bereits entsprechend der Endgestalt des Profilbauteils vorgeformt bzw. vorgebogen werden, um die beim Innenhochdruckumformverfahren erforderlichen Umformgrade auf ein für das jeweilige Material zulässiges Maß zu reduzieren. Insbesondere kann vorgesehen sein, dass das zweite Profilsegment einer zweidimensionalen und/oder dreidimensionalen Kurve folgt, wobei das erste Profilsegment oder auch weitere an dem zweiten Profilsegment befestigte Profilsegmente gerade geformt sind, also in Richtung der Erstreckung einer Geraden folgen. Auf diese Weise lassen sich aufwendige Herstellungsschritte, wie etwa das Biegen eines Profilsegmentes bzw. das Herstellen einer gebogenen Form in dem ohnehin kostenaufwendiger herzustellenden zweiten Profilsegment konzentrieren.

Mit Erstreckung des jeweiligen Profilsegmentes ist derjenige Teil gemeint, der anschließend im Umformwerkzeug umgeformt wird. Gegebenenfalls an einem Ende des Profilsegments vorgesehene konische Aufweitung die zum Anschluss einer Zuführstutzens für das Innenhochdruckumformedium bzw. das Kühlmedium erforderlich sind, zählen nicht zu der "Erstreckung".

### Darstellung der Erfindung

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch
Figur 1 eine Ansicht des erfindungsgemäßen ersten Profilsegmentes, des zweiten Profilsegmentes und eines Profilsegmentes vor dem Fügen,
Figur 2 eine Seitenansicht eines erfindungsgemäßen Halbzeugs,
Figur 3 eine Seitenansicht von links auf ein erfindungsgemäßes Profilbauteil,
Figur 4 eine Seitenansicht von rechts auf ein erfindungsgemäßes Profilbauteil,
Figur 5 eine schematische Ansicht von unten auf ein Halbzeug besteht aus einem ersten Profilsegment und einem zweiten Profilsegment,
Figur 6 eine schematische Ansicht von unten auf ein Halbzeug mit einem ersten Profilsegment und einem zweiten Profilsegment,
Figur 7 eine schematische Ansicht einer erfindungsgemäßen Herstellungsanlage
   und
Figur 8 eine schematische Darstellung des erfindungsgemäßen Herstellungsverfahrens in einzelnen Schritten.

Gleiche oder gleichwirkende Bauteile werden in den nachfolgend dargestellten Figuren anhand einer Ausführungsform mit Bezugszeichen versehen, um die Lesbarkeit zu verbessern.

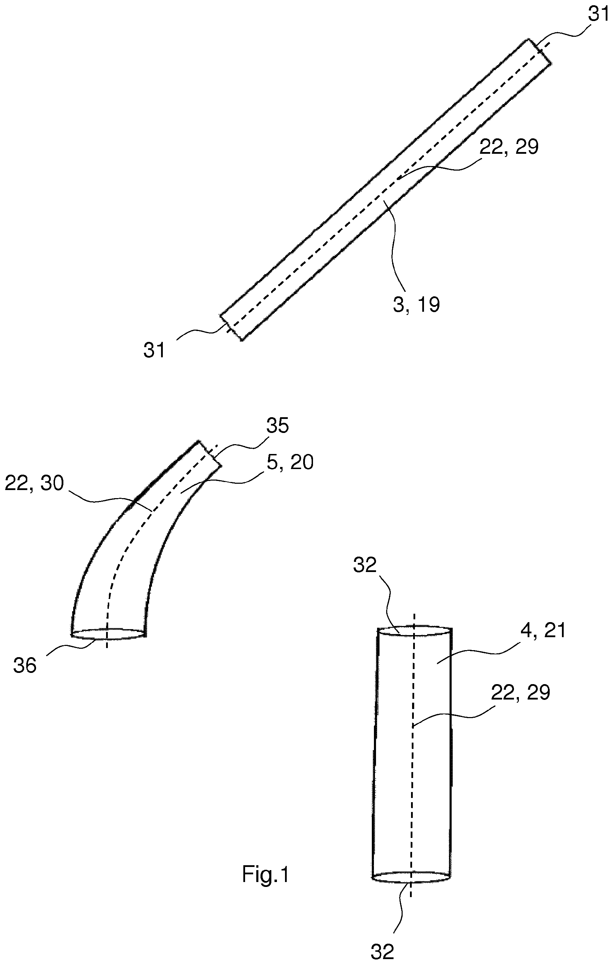

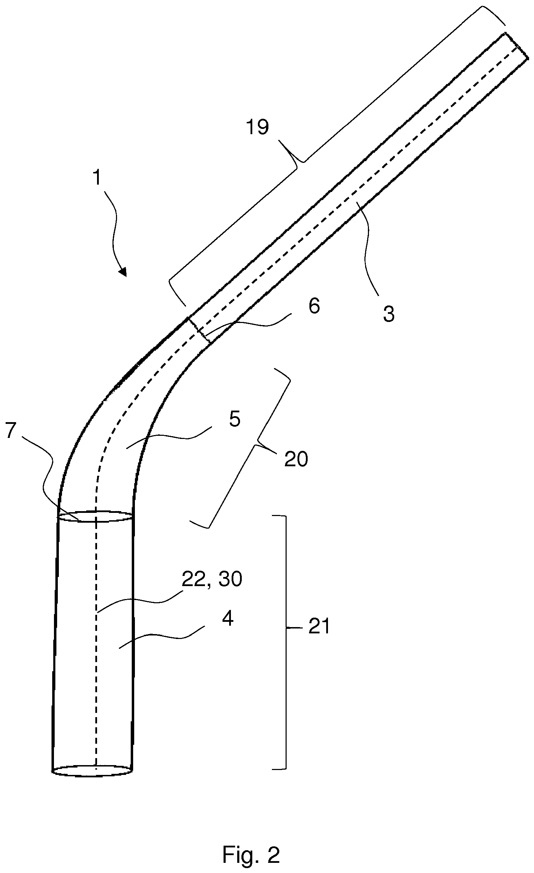

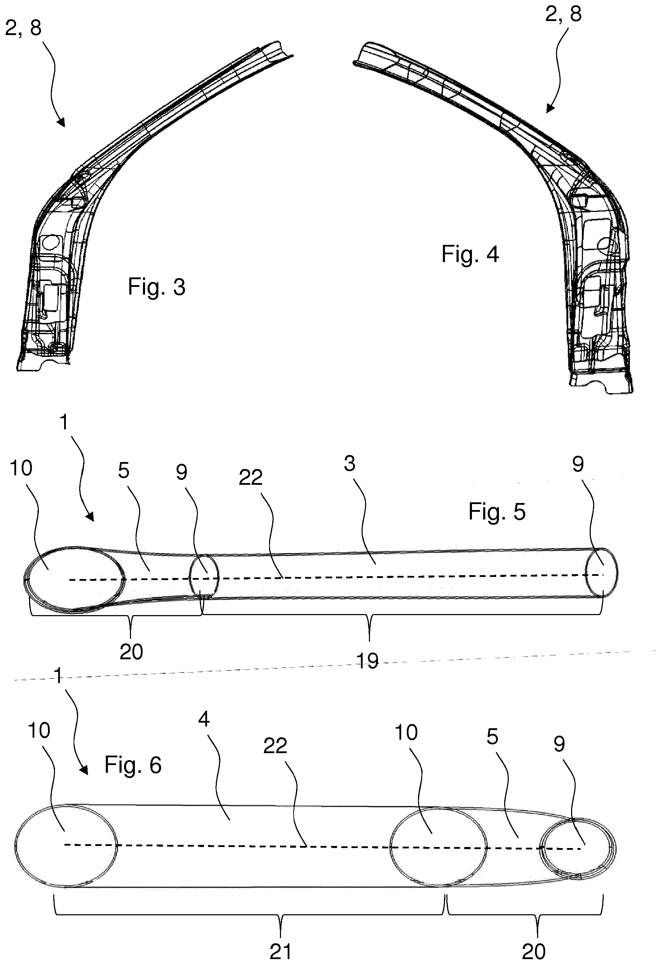

In der Figur 1 sind schematisch die Bestandteile gezeigt, aus denen sich das erfindungsgemäße Halbzeug 1 erstellten lässt, welches im aneinandergefügten Zustand in der Figur 2 dargestellt ist. Ein daraus erzeugtes Profilbauteil 2 ist in Seitenansichten von links in Figur 3 und von rechts in Figur 4 dargestellt.

In dem vorliegenden Beispiel wird durch das Profilbauteil 2 eine A-Säule 8 eines Cabriolets gebildet, welche für einen etwaigen Überschlag des Fahrzeugs besonders stabil ausgeführt sein muss. Insbesondere muss hier der Bereich zwischen einem Oberrohr 3 und einem Unterrohr 4 besonders stabil ausgeführt werden, der im vorliegenden Fall durch ein Zwischenteil 5 gebildet ist.

In der Figur 1 ist oben rechts das Oberrohr 3 gezeigt, welches das erste Profilsegment 19 im Sinne der Erfindung bildet. Das Profilsegment 19 weist entlang seiner Erstreckung 22 eine gleichförmige Querschnittsform auf. Das bedeutet, dass die im vorliegenden Fall beispielhafte kreisförmige Querschnittsform 9 an jeder Stelle entlang der Erstreckung 22 gleich ist. Die Erstreckung 22 selbst folgt im vorliegenden Fall bei dem ersten Profilsegment 19 einer Geraden 34. Endseitig ist das erste Profilsegment 19 mit zumindest einem Verbindungsende 31 versehen. Durch die gleichförmige Querschnittsform 9, die beispielsweise in der Figur 5 erkennbar ist, sind die Verbindungsenden 31 des ersten Profilsegmentes 19 ebenfalls gleichartig ausgebildet. Anstelle von zwei Verbindungsenden 31 kann an einem Ende auch eine nicht gezeigte konsiche Aufweitung zur dichtenden Aufnahme eines Anschlussstutzen für die Zuführung eines Umformmediums bzw. eines Kühlmediums. Eine solche konische Aufweitung liegt in einem Teil des jeweiligen Profilsegments, die nicht zur "Erstreckung" zählen muss.

Das zweite Profilsegment 20 weist entlang seiner Erstreckung 22 eine ungleichförmige Querschnittsform 9,10 auf, die sich in vorliegenden Fall ausgehend von einem Verbindungsende 31 zu einem Verbindungsende 32 des zweiten Profilsegmentes 20 hin aufweitet. Zudem folgt die Erstreckung 22 des zweiten Profilsegmentes 20 einer zumindest zweidimensionalen Kurve 30 handeln. Bei der Kurve 30 könnte es sich ebenso um eine dreidimensionale Kurve 30 handeln, die sich in den Darstellungen der Figuren 1 und 2 noch zusätzlich in die Blattebene erstreckt.

Das zweite Profilsegment als Zwischenteil 5 weist die beiden unterschiedlich ausgebildeten Verbindungsenden 35, 36 auf, wobei das Verbindungsende 35 bei der Herstellung des Profilsegmentes 20 derart ausgeformt wird, dass es mit dem Verbindungsende 31 des ersten Profilsegmentes 19 im Wesentlichen übereinstimmt. Dies bedeutet, dass die beiden Verbindungsenden 31 und 35 beispielsweise stumpf aneinandergelegt und durch eine einfache Schweißoperation miteinander verbunden werden können.

Das an dem zweiten Profilsegment 20 entlang der Erstreckung 22 dem ersten Verbindungsende 35 gegenüberliegende zweite Verbindungsende 36 ist wiederum im Wesentlichen übereinstimmend mit einem weiteren Verbindungsenden 32 eines dritten Profilsegmentes 21 ausgeformt. Das dritte Profilsegment 21 ist in der Figur 1 unten dargestellt. Es bildet das Unterrohr 4 der in der Figur 2 dargestellten A-Säule 8 und weist grundsätzlich die gleichen Eigenschaften wie das erste Profilsegment 19 auf. Abweichend davon kann jedoch die Querschnittsform des dritten Profilsegments 21 gemäß der Darstellung in der Figur 6 nicht eine Kreisform sondern beispielsweise eine ovale Querschnittsform haben. Möglich ist auch, eine Kastenform oder eine andersartige, jedoch über den Verlauf der Erstreckung 22 gleichförmige Querschnittsform zu wählen. Diese Querschnittsformen 9, 10 wären auch bei dem ersten Profilsegment 19 möglich. An das erste Profilsegment 19 oder auch an die anderen Profilsegmente 20, 21 können sich weitere andersartige Profilsegmente anschließen, um das erfindungsgemäße Halbzeug 1 zu formen.

In der Figur 2 ist das Halbzeug 1 mit aneinandergefügten Oberrohr 3, Unterrohr 4 und dazwischen gefügten Zwischenteil 5 dargestellt, welche an den Fügestellen 6, 7 verschweißt sind. Insbesondere eignet sich hier eine Schweißmethode, bei der die jeweiligen Profilsegmente 19, 20, 21 stumpf aneinandergelegt werden. Auf einfache Weise kann hier Laserschweißen oder aber Orbitallaserschweißen zur Anwendung kommen. Die Zugabe von Schweißzusatz ist ebenfalls möglich.

In der Figur 2 ist erkennbar, dass das Halbzeug 1 ebenfalls eine Erstreckung 22 aufweist, wobei es im Resultat eine ungleichförmige Querschnittsform entlang seiner Erstreckung 22 hat. Zudem folgt die Erstreckung 22 des Halbzeugs 1 hier einer Kurve 30, die zweidimensional oder auch dreidimensional ausgebildet sein kann.

Die Figuren 3 und 4 zeigen die fertigen Profilbauteile 2 in Form der A-Säulen 8, wobei hier erkennbar wird, dass die in der Figur 2 gezeigten Fügestellen 6, 7 bei dem fertigen Profilbauteil 2 nicht mehr bzw. nicht mehr wesentlich in Erscheinung treten.

In den Figuren 5 und 6 sind die unterschiedlichen Querschnittsformen 9, 10 der Profilsegmente 19, 20, 21 dargestellt, wobei die Querschnittsform 9 in etwa eine Kreisform und die Querschnittsform 10 in etwa ein Oval darstellen soll. Anstelle eines Kreises oder eines Ovals kann auch ein unregelmäßig geformter Umriss oder eine Kastenform vorgesehen sein. Dies ist abhängig von der gewünschten Endform des Profilbauteils 2 sowie von den Herstellungsparametern des Innenhochdruckumformverfahrens, in welchem das Halbzeug 1 in die Endgestalt umgeformt wird.

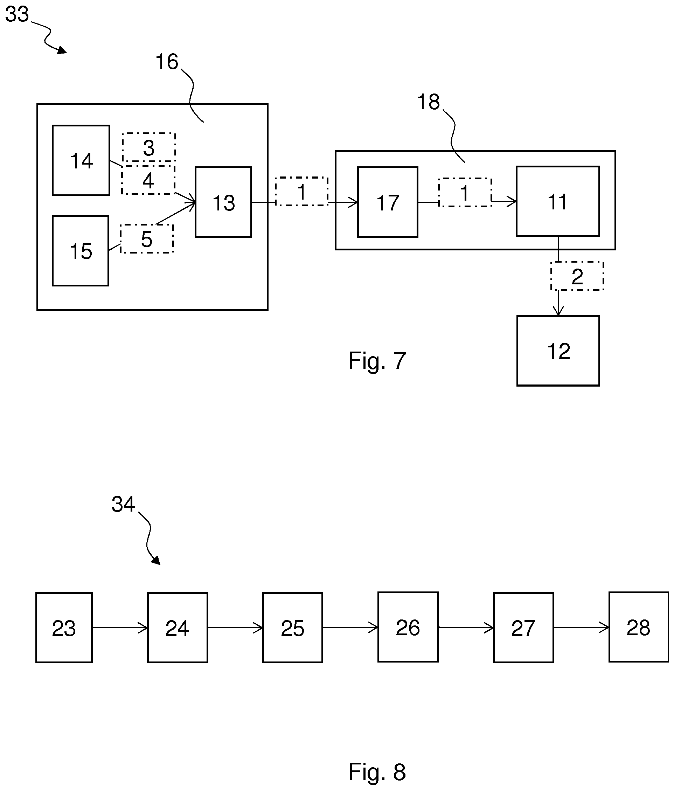

In der Figur 7 ist schematisch eine Herstellungsanlage 33 dargestellt, in welcher das erfindungsgemäße Profilbauteil 2 hergestellt werden kann. Diese Herstellungsanlage 33 weist eine Anlage 16 zum Herstellen des Halbzeugs 16 auf, in welcher eine Rohrzuführung 14 zur Herstellung des ersten Profilsegments 19, d. h. dem Oberrohr 3, sowie zur Herstellung und Zuführung des dritten Profilsegments, dem Unterrohr 4, angeordnet ist. Zudem weist die Halbzeugherstellungsanlage 16 eine U-O-Bearbeitungsstation auf, in der das zweite Profilsegment 20, d.h. das Zwischenteil 5, hergestellt wird. Das Oberrohr 3, das Unterrohr 4 sowie das Zwischenteil 5 werden dann innerhalb der Halbzeugherstellungsanlage 16 einer Fügestation 13 zugeführt, in welcher das Halbzeug 1 durch Aneinanderfügen des Oberrohres 3, des Unterrohres 4 und des Zwischenteils 5 erzeugt wird. Das Halbzeug 1 wird dann einer Erwärmungsvorrichtung 17 zugeführt, in welcher es auf eine Härtungstemperatur, beispielsweise oberhalb von 950° C, erwärmt wird, um dann im erwärmten Zustand dem Umformwerkzeug 11 für das spätere Umformen zugeführt zu werden. Innerhalb des Umformwerkzeugs 11 findet das Umformen statt. Das Halbzeug 1 wird entweder durch Pressen oder Innenhochdruckumformen 26 zu den Profilbauteil 2 umgeformt. Das Innenhochdruckumformen 26 erfolgt indem ein mit Druck beaufschlagtes und gegebenenfalls vorgewärmtes Gas als Umformmedium in das Innere des Halbzeugs 1 eingeleitet wird, so dass sich das Material des Halbzeugs 1 unter dem Einfluss des Gasdrucks an eine Kontur des Umformwerkzeugs 11 anlegt und dabei die Endgestalt des Profilbauteils 2 annimmt. Das so erzeugte Profilbauteil 2 verbleibt dann zunächst weiter in dem Umformwerkzeug 11.

Das als Umformmedium dienende Gas wird anschließend aus dem Umformwerkzeug 11 abgelassen und durch ein Kühlmedium ersetzt, welches für das Abschrecken 27 des Profilbauteils 2 und somit für das Härten sorgt. Das Umformwerkzeug 11 und die Erwärmungsvorrichtung 17 können jeweils Teil einer räumlich zusammengehörigen Innenhochdruckumformanlage 18 sein.

Das so endgeformte und gehärtete Profilbauteil 2 kann dann noch einer Nachbearbeitungsstation 12 zugeführt werden, in welcher zum Beispiel mittels Laserschneiden überstehende Kanten und Grate oder aber gegebenenfalls endseitig vorgesehene konische Aufweitungen für das Innenhochdruckumformen 26 entfernt werden können.

Der in der Figur 8 schematisch dargestellte Prozessablauf des Herstellungsverfahrens 34 ist wie folgt:
Zunächst erfolgt die Profilherstellung 23 der ersten und zweiten und gegebenenfalls weiteren Profilsegmente 19, 20, 21, welche anschließend durch Fügen 24 zu dem Halbzeug 1 zusammengesetzt werden. Das Halbzeug 1 wird danach durch Erwärmen 25 auf eine Härtungstemperatur, beispielsweise oberhalb von 950° C, gebracht, um anschließend durch das Innenhochdruckumformen 26 in die Endgestalt des Profilbauteils 2 umgeformt zu werden. Das Profilbauteil 2wird durch Abschrecken 27 und die dadurch erfolgende Gefügeumwandlung gehärtet. Anschließend kann eine Nachbearbeitung 28 erfolgen, um gegebenenfalls überstehende Katen und Grate zu entfernen.

Das erfindungsgemäße Verfahren 34 bzw. das erfindungsgemäße Halbzeug 1 erlauben es, sowohl partiell als auch vollständig gehärtete Profilbauteile zu erzeugen. Das Zusammensetzen des Halbzeugs 1 durch unterschiedliche Profilsegmente 19, 20, 21 ermöglicht es, Profilsegmente unterschiedlicher Materialien, beispielsweise unterschiedlicher Härtbarkeit zu verwenden, so dass beim Abschrecken 27 von der Härtungstemperatur in einem Arbeitsschritt unterschiedliche Härtegrate in demselben Profilbauteil 2 entstehen.

### Bezugszeichenliste

- 1: Halbzeug
- 2: Profilbauteil
- 3: Oberrohr
- 4: Unterrohr
- 5: Zwischenteil
- 6: Fügestelle
- 7: Fügestelle
- 8: A-Säule
- 9: Querschnittsform (Kreis)
- 10: Querschnittsform (Oval)
- 11: Umformwerkzeug
- 12: Nachbearbeitungsstation
- 13: Fügestation
- 14: Rohrzuführung
- 15: U-O-Bearbeitungsstation
- 16: Halbzeugherstellungsanlage
- 17: Erwärmungsvorrichtung
- 18: Innenhochdruckumformanlage
- 19: Profilsegment
- 20: Profilsegment
- 21: Profilsegment
- 22: Erstreckung
- 23: Profilherstellung
- 24: Fügen
- 25: Erwärmen
- 26: Innenhochdruckumformen
- 27: Abschrecken
- 28: Nachbearbeitung
- 29: Gerade
- 30: Kurve
- 31: Verbindungsende
- 32: Verbindungsende
- 33: Herstellungsanlage
- 34: Herstellungsverfahren
- 35: Verbindungsende
- 36: Verbindungsende

## Patentansprüche

1. Verfahren (34) zur Herstellung eines wenigstens partiell gehärteten Profilbauteils (2), wobei zunächst ein erstes Profilsegment (19), das entlang seiner Erstreckung (22) eine gleichförmige Querschnittsform (9, 10) aufweist, und ein zweites Profilsegment (20), das entlang seiner Erstreckung (22) eine ungleichförmige Querschnittsform (9, 10) aufweist, an einer Fügestelle (6) aneinandergefügt werden, um wenigstens einen Teil eines Halbzeugs (1) zu bilden, und das erste und das zweite Profilsegment (19, 20) dazu an der Fügestelle (6) im Wesentlichen miteinander übereinstimmende Querschnittsformen (9, 10) aufweisen, wobei das Halbzeug (1) nach Erwärmung (25) auf eine Härtungstemperatur in einem Umformwerkzeug (11) mittels Innenhochdruckumformen (26) oder Pressen zu dem Profilbauteil (2) umgeformt wird, welches nach dem Umformen (26) innerhalb des Umformwerkzeuges (11) durch Abschrecken (27) gehärtet wird, wobei das erste Profilsegment (19) durch Roll- oder Walzprofilieren und das zweite Profilsegment (20) durch ein U-O-Biegeverfahren erzeugt wird.

2. Verfahren (34) nach Anspruch 1, **dadurch gekennzeichnet, dass** das zweite Profilsegment (20) bei dessen Herstellung mit einem Verbindungsende (32) erzeugt wird, das mit dessen Querschnittsform (9, 10) im Wesentlichen mit der Querschnittsform (9, 10) des ersten Profilbauteils (19) übereinstimmt.

3. Verfahren (34) nach einem der vorhergehenden Ansprüche, **dadurch gekennzeichnet, dass** das Fügen (24) der Profilsegmente (19, 20) stoffschlüssig, vorzugsweise durch Schweißen, besonders bevorzugt durch Laserschweißen, insbesondere durch Orbitallaserschweißen erfolgt, wobei die Profilsegmente (19, 20) Verbindungsenden (31, 32, 33) aufweisen, die an der Fügestelle (6) vorzugsweise stumpf aneinandergefügt werden.

4. Verfahren (34) nach einem der vorhergehenden Ansprüche, **dadurch gekennzeichnet, dass** an das erste oder das zweite Profilsegment (19, 20) wenigstens ein drittes Profilsegment (21) gefügt wird, welches entweder eine gleichförmige oder ungleichförmige Querschnittsform (9, 10) entlang seiner Erstreckung (22) aufweist.

5. Verfahren (34) nach einem der vorhergehenden Ansprüche, **dadurch gekennzeichnet, dass** wenigstens eines der Profilsegmente (19, 20, 21) aus einer Legierung besteht, die durch Erwärmen (25) auf eine Härtungstemperatur und anschließendes Abschrecken (27) härtbar ist, wobei die Legierung vorzugsweise aus einem Stahl, insbesondere aus einem borlegierten Stahl besteht.

6. Verfahren (34) nach einem der vorhergehenden Ansprüche, **dadurch gekennzeichnet, dass** das Innenhochdruckumformen (26) durch ein mit Druck beaufschlagtes Gas als Umformmedium, insbesondere bei einem Druck zwischen 300 bar und 600 bar, und das Abschrecken (27) mit einem separaten Kühlmedium erfolgt, welches nach dem Innenhochdruckumformen (26) in das Umformwerkzeug (11) geleitet wird.

## Claims

1. Method (34) for producing an at least partially hardened profiled component (2), wherein a first profiled segment (19), which has a uniform cross-sectional shape (9, 10) along its extent (22), and a second profiled segment (20), which has a non-uniform cross-sectional shape (9, 10) along its extent (22), are initially joined together at a joining point (6) in order to form at least a part of a semifinished product (1), and to this end the first and the second profiled segment (19, 20) have cross-sectional shapes (9, 10) which correspond substantially to one another at the joining point (6), wherein, after being heated (25) to a hardening temperature, the semifinished product (1) is formed in a forming tool (11) by means of internal high pressure forming (26) or pressing to form the profiled component (2), which is hardened by quenching (27) after forming (26) inside the forming tool (11), wherein the first profiled segment (19) is produced by means of roll profiling and the second profiled segment (20) is produced by means of a U-O bending process.

2. Method (34) according to Claim 1, **characterized in that** the second profiled segment (20), during production thereof, is produced with a connecting end (32) whose cross-sectional shape (9, 10) corresponds substantially to the cross-sectional shape (9, 10) of the first profiled segment (19).

3. Method (34) according to either of the preceding claims, **characterized in that** the joining (24) of the profiled segments (19, 20) is effected in a materially bonded manner, preferably by welding, particularly preferably by laser welding, in particular by orbital laser welding, wherein the profiled segments (19, 20) have connecting ends (31, 32, 33) which are preferably butted together at the joining point (6).

4. Method (34) according to one of the preceding claims, **characterized in that** at least a third profiled segment (21), which has either a uniform or non-uniform cross-sectional shape (9, 10) along its extent (22), is joined to the first or the second profiled segment (19, 20).

5. Method (34) according to one of the preceding claims, **characterized in that** at least one of the profiled segments (19, 20, 21) is composed of an alloy which can be hardened by heating (25) to a hardening temperature and subsequent quenching (27), wherein the alloy is composed preferably of a steel, in particular of a boron-alloyed steel.

6. Method (34) according to one of the preceding claims, **characterized in that** the internal high pressure forming (26) is effected by way of a pressurized gas as forming medium, in particular at a pressure between 300 bar and 600 bar, and the quenching (27) is effected using a separate cooling medium which is conducted into the forming tool (11) after the internal high pressure forming (26).

## Revendications

1. Procédé (34) de fabrication d'un élément de construction profilé (2) au moins partiellement durci, un premier segment profilé (19) présentant le long de son extension (22) une forme (9, 10) uniforme en coupe transversale, et un deuxième segment profilé (20) présentant le long de son extension (22) une forme (9, 10) non uniforme en coupe transversale, lesquels segments profilés étant réunis l'un à l'autre au niveau d'un site d'assemblage (6) afin de former au moins une partie d'un produit semi-fini (1), et les premier et deuxième segments profilés (19, 20) présentant pour cela au niveau du site d'assemblage (6) des formes (9, 10) en coupe transversale qui coïncident sensiblement l'une avec l'autre, le produit semi-fini (1) étant mis en forme après chauffage (25) à une température de durcissement dans un outil de formage (11) par formage à haute pression interne (26) ou par pressage pour obtenir l'élément de construction profilé (2) qui, après formage (26), est durci à l'intérieur de l'outil de formage (11) par trempe (27), le premier segment profilé (19) étant produit par profilage sur galets ou sur rouleaux et le deuxième segment profilé (20) étant produit par un procédé de pliage U-O.

2. Procédé (34) selon la revendication 1, **caractérisé en ce que** le deuxième segment profilé (20) est réalisé lors de sa fabrication avec une extrémité de raccordement (32) dont la forme (9, 10) en coupe transversale coïncide sensiblement avec la forme (9, 10) en coupe transversale du premier élément de construction profilé (19).

3. Procédé (34) selon l'une des revendications précédentes, **caractérisé en ce que** l'assemblage (24) des segments profilés (19, 20) est effectué par liaison de matière, de préférence par soudage, de manière particulièrement préférée par soudage laser, notamment par soudage laser orbital, les segments profilés (19, 20) comportant des extrémités de raccordement (31, 32, 33) qui sont de préférence aboutées au niveau du site d'assemblage (6).

4. Procédé (34) selon l'une des revendications précédentes, **caractérisé en ce qu'**au moins un troisième segment profilé (21) est assemblé au premier ou au deuxième segment profilé (19, 20), qui présente le long de son extension (22) une forme uniforme ou non uniforme (9, 10) en coupe transversale.

5. Procédé (34) selon l'une des revendications précédentes, **caractérisé en ce qu'**au moins un des segments profilés (19, 20, 21) est en alliage durcissable par chauffage (25) à une température de durcissement et par trempe ultérieure (27), l'alliage étant de préférence un acier, notamment un acier allié au bore.

6. Procédé (34) selon l'une des revendications précédentes, **caractérisé en ce que** le formage à haute pression interne (26) est effectué par un gaz sous pression utilisé comme milieu de formage, notamment à une pression comprise entre 300 bars et 600 bars, et la trempe (27) est effectuée avec un milieu de refroidissement séparé qui est injecté dans l'outil de formage (11) après le formage à haute pression interne (26).
